Europäisches Patentamt

European Patent Office

Office européen des brevets

(19)

(11) Publication number: **0 021 811**
**A1**

(12) # EUROPEAN PATENT APPLICATION

(21) Application number: **80302093.2**

(22) Date of filing: **20.06.80**

(51) Int. Cl.³: **B 23 Q 11/10**

(30) Priority: **22.06.79 GB 7921773**

(43) Date of publication of application:
**07.01.81 Bulletin 81/1**

(84) Designated Contracting States:
**BE DE FR GB IT SE**

(71) Applicant: **CERA INTERNATIONAL LIMITED**
**Cera House Mitcham Industrial Estate Streatham Road Mitcham Surrey(GB)**

(72) Inventor: **Robert, Osteen Alexander**
**Cera House Unit 17 Mitcham Industrial Estate Mitcham, Surrey(GB)**

(74) Representative: **Everitt, Christopher James Wilders et al,**
**F.J. CLEVELAND & COMPANY 40/43 Chancery Lane London WC2A 1JQ(GB)**

(54) Method of and apparatus for treating liquid stored in a machine tool system settling tank.

(57) A machine tool system liquid settling tank (10) has a drag conveyor (15) which is partly immersed and which slopes upwardly to a discharge location (16) above the maximum liquid level (23). An aerator (28) is provided at a location spaced from the discharge location (16). An oil skimmer (31) is provided between the aearator (28) and the drag conveyor discharge location (16). A pump (24) is provided for drawing liuqid from the foot of the sloping drag conveyor portion and feeding it to the aerator (28) in which it is aerated outside the tank (10) and from which it is returned, in its aerated condition, to the tank (10) and directed towards the oil skimmer (31) and the drag conveyor (15). The pump (24) the drag conveyor (15) and the oil skimmer (31) are driven after the machine system is shut down.

FIG.1A

EP 0 021 811 A1

./...

FIG.1B

- 1 -

"METHOD OF AND APPARATUS FOR TREATING LIQUID STORED IN A MACHINE TOOL SYSTEM SETTLING TANK"

This invention relates to treatment of coolant liquid stored in a machine tool system coolant liquid settling tank.

During normal operation of the system, coolant liquid is drawn from the tank and fed through clarifying or filtering means to a machining station of the system where it is used as a coolant and/or a lubricant during a machining operation performed at that station. The liquid is collected after such use, along with waste solids, such as swarf removed from the work piece, and, in many systems, with tramp oils as well. The collected liquid and other waste matter is returned to the tank.

Bacteria in the liquid stored in the tank is a problem both because it emits obnoxious smells and because it can be a health hazard. There are two forms of bacteria, namely aerobic bacteria and anaerobic bacteria. Aerobic bacteria is found at the surface of the liquid in the tank because it has an affinity for oxygen. It can be treated fairly readily by conventional chemical means and hence does not present a major problem. Anaerobic bacteria is more difficult to deal with. Whilst the continual movement of the liquid in the tank that goes with circulation of liquid drawn from the tank for feeding to a machining station and return to the tank of liquid collected from such a machining station, is sufficient to inhibit the growth of anaerobic bacteria whilst the machine tool system is in operation, anaerobic bacteria tends to grow very quickly once the machine tool system is shut down. The aversion of anaerobic bacteria to oxygen means that it is found below the surface of liquid in the reservoir and in addition to the obnoxious smell and health hazards that accompany it, over a period of time it causes a breakdown of the liquid itself.

Tramp oils that are introduced into the tank with returned used coolant liquid form a surface layer on the liquid when the machine tool system is shut down. Their presence in a settling tank is undesirable for several reasons; viz. firstly they have undesirable effects on cutting tools if they are mixed with the coolant liquid fed to a machining station, secondly the surface layer they form is an air impermeable barrier between the coolant liquid and the air above so

- 4 -

that their presence establishes an environment which is conducive to the growth of anaerobic bacteria, and thirdly they comprise a food for aerobic bacteria. There are various types of oil skimmers which are used for skimming such surface layers of tramp oil from liquid stored in a machine tool system settling tank whilst the machine tool system is shut down.

The Complete Speciifcation of our pending British Patent Application No. No. 3915/77 describes and

claims a method of inhibiting cultivation of anaerobic bacteria in a machine tool system coolant liquid settling tank in which, whilst the machine tool system is shut down, liquid is drawn from the tank, aerated outside the tank and returned to the tank. The liquid is described as being drawn from a region in the tank which is near the bottom of the tank and which is spaced from the bottom of an upwardly inclined portion of a path along which solids are conveyed out of the liquid to a discharge location by a drag conveyor, that

- 5 -

region being spaced from the upwardly inclined conveyor path portion by another portion of that path which runs along the bottom of the tank, the upwardly inclined path portion being at an end of the tank at which used coolant liquid is returned to the tank from the machining station at which it was used. That region was selected as being the region from which liquid should be drawn for aeration outside the tank and return because it is likely to be the region in which the liquid is most stagnant. Apparatus for carrying out the foregoing method is described and claimed in the Complete Specification of our pending British Patent Application No. 3915/77.

We have found that effective inhibition of cultivation of anaerobic bacteria is impeded by waste solids which float in the liquid in the tank and do not gravitate to the drag conveyor. Such waste solids may comprise swarf cut from aluminium or aluminium alloy workpieces. Such floatable solids that are introduced into the tank build up over a time period and form a barrier between the liquid

- 6 -

and the air above so that direct contact between the liquid and the air above is interfered with. Also the stream of aerated liquid returned to the tank by the external aerating means can be deflected by the floatable solids so that its circulation within the liquid is limited. These two factors impede effective inhibition of anaerobic bacteria cultivation because they reduce the extent to which the liquid in the tank can be aerated. Moreover tramp oil tends to cling to the floatable solids so that the operation of an oil skimmer, where one is provided to skim off the tramp oils, is impeded.

An object of this invention is to improve treatment of coolant liquid stored in a machine tool system coolant liquid settling tank.

Briefly, in operation of this invention whilst a machine tool system is shut down, coolant liquid stored in a coolant liquid settling tank of that machine tool system is drawn from the tank, aerated outside the tank and returned to the tank. A drag conveyor, which is provided for dragging solids out of liquid in the tank, is also kept running to

- 7 -

drag such solids out of the liquid within the tank whilst the machine tool system is shut down. The aerated liquid is directed back into the liquid in the tank at a location which is remote from the location at which the drag conveyor emerges from the liqid to convey solids out of the liquid to a discharge location.

Preferably the liquid to be aerated outside the tank is drawn from a location adjacent the bottom of the portion of the path of the conveyor that extends upwards to the location at which the conveyor emerges from the liquid. Also where it is desirable that oil be skimmed from the surface of liquid in the tank whilst the machine tool system is shut down, it is preferably so skimmed at a location which is between the location at which aerated liquid is directed into the tank and the location at which the drag conveyor emerges from the liquid in the tank and preferably nearer the latter than the former. Conveniently oil is skimmed from the surface substantially directly above the location at which liquid is drawn from the

- 8 -

tank.

The aerated liquid may be directed back into the tank with a vectorial component which extends along the surface of liquid in the tank towards said location at which the drag conveyor emerges from the liquid.

The preferred form of drag conveyor comprises conveying means for conveying solid matter up an upwardly inclined sloping portion of the path to a discharge location above the maximum level to which coolant liquid is adapted to be contained in the tank. Aerating means provided for aerating liquid outside the tank may have an inlet and an aerated liquid discharge outlet which is orientated to discharge aerated liquid into the tank in the region of said maximum level and at a location adjacent an end of the tank which is remote from said drag conveyor discharge location.

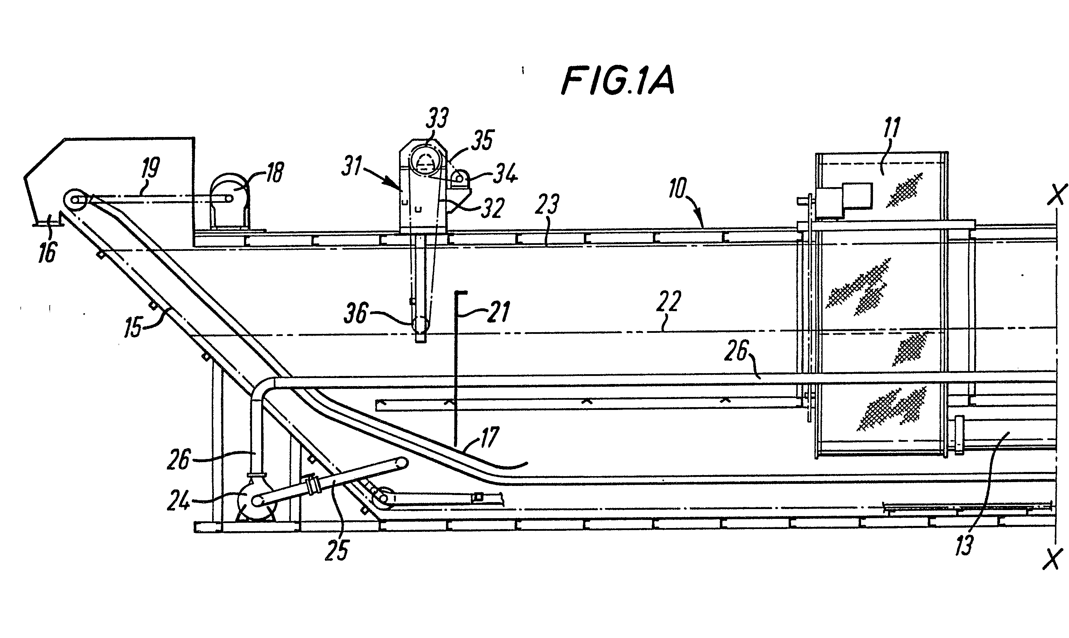

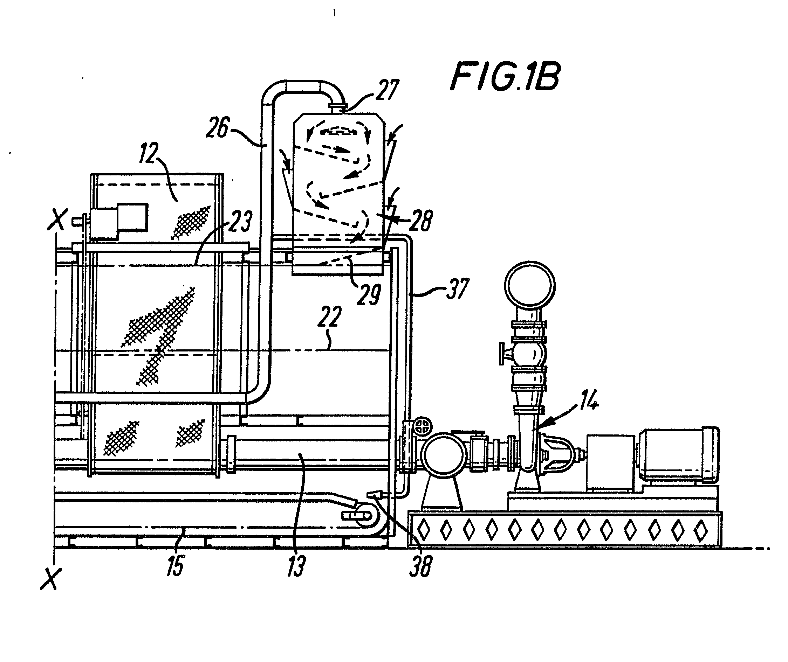

A machine tool system coolant liquid settling tank in which this invention is embodied will be described now by way of example with reference to the Figures 1A

- 9 -

and 1B which accompany this specification and which together comprise a schematic illustration of the tank, the common plane being shown as X-X in each Figure.

The tank 10 stores liquid, conveniently a mixture of oil and water, which is for use as a coolant in a machining operation carried out at each machining station of each machine tool of the system.

Two sets 11 and 12 of horizontal rotary drum filter apparatus are mounted within the tank 10, each projecting upwards from its drum through the top of the tank 10 to its head roller which is supported above the tank 10. The chambers within the two drums are connected in series by a pipe 13 to the inlet of a liquid pump 14 which is mounted outside the tank 10.

A drag conveyor 15 is provided in the tank 10 and comprises spaced parallel lengths of angle iron, each of which is fixed at either end to a respective one of a pair of endless chains. Each chain runs on a driven sprocket, an end idler sprocket and an intermediate roller. The end idler

- 10 -

sprockets are substantially coaxial. The
intermediate rollers are normally substantially coaxial and in the same horizontal
plane as the

- 11 -

end idler sprockets. The driven sprockets are substantially coaxial and are supported above the top of the tank 10 at a discharge station 16 which is formed at one end of the tank 10. Hence the conveyor 15 is guided along a path which comprises a bottom portion which extends along the bottom of the tank 10 from the end idler sprockets to the intermediate. rollers, which turns through about $30^{\circ}$ around those rollers to an inclined portion which extends upwards from those rollers to the driven sprockets, and a return portion which passes under a curved guide 17 to the end idler sprockets. The bottom portion of the conveyor path extends below the two drums. A power plant 18 for driving the drag conveyor 15 is mounted on top of the tank 10 and is drivingly coupled to the driven sprockets by a drive chain 19. A vertical baffle 21 extends upwards from the curved guide 17. The top of the baffle 21 is below the top of the tank 10.

A control system is provided whereby the pump 14 is driven continuously during normal operation of the machine tool system so that it draws filtered liquid from within the two drums and feeds it to each machining station of the system for use as a coolant in a machining operation at that station. The control system is also arranged so that the drag conveyor power plant 18 is energized continuously whilst the pump 14 is being driven. Liquid used as a coolant at each station is collected after use and is returned to the tank 10 through an inlet duct (not shown) which is formed in the top of the tank 10 above the upwardly inclined portion of the drag conveyor path and at a location which is horizontally spaced from the rotary drum filter apparatus by a greater distance than is the baffle 21.

The pump 14 is arranged so that the level of liquid in the tank 10 is maintained substantially constant whilst it is being driven, that level 22 being above the drums but below the top of the baffle 21. The baffle 21 serves as a barrier which keeps soils, dirt, swarf and other foreign matter discharged into the tank 10 with used coolant liquid returned from the machining stations between it and the inclined portion of the conveyor 15. Hence such large solid foreign matter gravitates onto the conveyor 15 which is driven continuously by the power plant 18 so that the large foreign matter is carried upwards to the conveyor discharge station 16 by the conveyor 15 as the machine tool system is in operation, although some forms of such solid matter may float and tend not to be collected by the conveyor 15.

When the machine tool system is shut down, the control system is operated to de-energise the pump 14 so that the level of liquid in the tank 10 rises to a maximum level 23 which is above the top of the baffle 21 and just below the top of the tank 10 and which is well below the driven sprockets of the drag conveyor 15 and the head rollers of the drum filter apparatus.

A second pump 24 is mounted outside the tank 10 below the inclined portion of the drag conveyor 15. The control system is arranged so that the pump 24 is energised automatically for a predetermined time (say 2 hours) after the pump 14 is de-energised. Hence the pump 24 is driven for that time interval after the machine tool system is shut down. The control system is also arranged so that drag conveyor 15 is driven continuously by its power plant 18 when the

0021811

- 14 -

second pump 24 is driven as well as when the pump 14 is driven.

The inlet of the second pump 24 is connected to one end of an inlet pipe 25 which passes in a fluid tight manner through an aperture in a wall of the tank 10. The other end of the inlet pipe 25 is open and is located between the intermediate rollers and the curved guide 17 within that part of the space that is enclosed by the drag conveyor 15. Hence the inlet of the pipe 25 is located as near as is practicable to the bottom of the tank 10.

The outlet of the second pump 24 is connected by a pipe 26, which runs outside the tank 10 for substantially the total length of the tank 10, to an inlet duct 27 of an aerator unit 28. The aerator unit 28 is substantially similar in construction and mode of operation to the construction and mode of operation of the aerator unit that is described and illustrated in the Complete Specification of our Pending British Patent Application No. 3915/77.

The aerator unit 28 is mounted at the top of tha tank 10 adjacent the end of the tank 10 furthest from the drag conveyor discharge station

- 15 -

16 and so that the bottom of its lowest downwardly sloping member 29, which forms its discharge outlet, is at the maximum liquid level 23. The downwardly sloping member 29 slopes downwards towards the drag conveyor discharge station 16 at a shallow angle of the order of 15°.

A belt type oil skimmer 31 is mounted at the top of the tank 10 above the curved guide 17 and at a location which is horizontally spaced from the rotary drum filter apparatus by a smaller distance than is the baffle 21. The endless belt 32 runs around an upper roller 33, which is driven by a motor 34 through a drive chain 35, and a greater diameter lower roller 36. The upper roller 33 is above the maximum level 23. The lower roller 36 extends just below the lower level 22. Operation of the motor 34 is controlled by the control system so that it is energized to drive the endless belt 32, and thus to operate the oil skimmer 31, when the pump 24 is energised.

The aerating apparatus comprising the second pump 24 and the aerator unit 28, and the oil skimmer 31 are inoperative whenever the pump 14 is energised and hence when the machine tool system is in operation. The drag conveyor 15 is driven to convey solid matter deposited on it to the discharge station 16 both when the pump 14 and the pump 24 is energised and hence when the machine tool system is in operation and when it is shut down initially.

When the pump 14 is de-energised with shut down of the machine tool system, the level of coolant liquid in the tank rises above the top of the baffle 21, to the maximum level 23. The baffle 21 no longer serves as a barrier to large solid matter, such as soils, dirt, swarf and other such matter, so that any such matter that floats can float past the baffle 21 towards the drum filter apparatus 11 and 12. However, as soon as the pump 14 is de-energised the second pump 24 is driven to draw liquid from that part of the tank 10 that is near the bottom and between the curved guide 17 and the intermediate rollers, and to feed that liquid through the pipe 26 to the aerator unit 28. The liquid is aerated as it passes through the aerator unit 28 and flows down the discharge slope 29 into the liquid in the tank 10, being directed towards the drag conveyor discharge station 16 and the oil skimmer 31 as it does. A tendency for foam to be formed by the action of pouring liquid into the liquid in the tank 10 is minimised by the bottom of the slope 29 being at the level of the liquid so that the aerated liquid is returned to the tank 10 gently.

The oil skimmer motor 34 is also . energised as soon as the pump 14 is de-energised so that the belt 32 which is immersed is driven to skim off the surface layer of oil from the liquid in the tank 10.

The introduction of aerated liquid into the tank 10 inhibits the growth of anaerobic bacteria within the liquid in the tank 10. Also the arrangement by which liquid for feeding through the aerator unit 28 is withdrawn from a location adjacent the foot of the inclined portion of the drag conveyor path, the location of the aerator unit at the opposite end of the tank 10 and the angle of the downwardly sloping discharge 29 results in movement of the liquid in the tank generally towards the oil skimmer 31 and the upwardly inclined conveyor path portion, Hence tramp oil deposits on the surface of the liquid are urged towards the oil skimmer 31 so that the action of skimming them off is enhanced, and any floating solids are urged towards the inclined portion of the drag conveyor 15 by which they can be captured and carried out of the tank 10.

A minor portion of the liquid output of the second pump 24 is bled from the main stream that is fed to the aerator unit 28, that minor portion being fed via a branch pipe 37 to an injector 38 which is located in the end wall of the tank below the aerator unit 28 and near to the bottom of the tank 10, the injector 38 being arranged to inject that liquid into the liquid in the tank 10 so as to generate movement in the liquid in that region of the tank 10. A manually operable valve may be provided in the branch pipe 37.

0021811

- 19 -

<u>CLAIMS</u>

1.      A method of treating coolant liquid stored in a machine tool system coolant liquid settling tank in which, whilst the machine tool system is shut down, liquid is drawn from the tank, aerated outside the tank and returned to the tank, wherein a drag conveyor which is provided for dragging solids out of liquid in the tank is also kept running to drag such solids out of the liquid whilst the machine tool system is shut down and the aerated liquid is directed back into the liquid in the tank at a location which is remote from the location at which the drag conveyor emerges from the liquid to convey solids out of the liquid to a discharge location.

2.      A method according to Claim 1, wherein the liquid to be aerated outside the tank is drawn from a location adjacent the bottom of the portion of the path of the conveyor that extends upwards to the location at which the conveyor emerges from the liquid.

3.      A method according to Claim 1 or Claim 2, wherein, whilst the machine tool system is shut down, oil is skimmed from the surface of liquid in the tank, at a location which is between the location at which aerated liquid is directed into the tank and the location at which the drag conveyor emerges from the liquid in the tank.

4.      A method according to Claim 3, wherein the oil is skimmed from the surface nearer the latter location than the former.

5.      A method according to Claim 3 or Claim 4 when appended to Claim 2, wherein oil is skimmed from the surface substantially directly above the location at which liquid is drawn from the tank.

6.      A method according to any one of Claims 1 to 5, wherein the aerated liquid is directed back into the tank with a vectorial component which extends along the surface of liquid in the tank towards said location at which the drag conveyor emerges from the liquid.

7.        A machine tool system coolant liquid settling tank having a drag conveyor in it, the drag conveyor comprising conveying means for conveying solid matter up an upwardly inclined sloping portion of the conveyor path to a discharge location above the maximum level to which coolant liquid is adapted to be contained in the tank; there being provided aerating means having an inlet and an aerated liquid discharge outlet which is orientated to discharge aerated liquid into the tank in the region of said maximum level, and a pump for drawing coolant liquid from the tank and feeding it to the aerating means inlet so that it is aerated and returned to the tank via said aerated liquid discharge outlet, wherein the aerating means discharge outlet is orientated to discharge aerated liquid into the tank at a location adjacent an end of the tank which is remote from said drag conveyor discharge location.

8.        A machine tool system coolant liquid settling tank according to Claim 7, wherein the pump inlet is connected to a location in the tank which is adjacent the foot of the upwardly inclined sloping portion of the conveying means path so that coolant liquid drawn from the tank by the pump is drawn from that location.

9.      A machine tool system coolant liquid settling tank according to Claim 7 or Claim 8, wherein liquid injecting means are provided in the tank below the aerating means discharge outlet, said injecting means and the aerating means inlet being connected in parallel to the pump outlet so that a minor part of a stream of coolant liquid drawn from the tank by operation of the pump is fed to the injecting means which are adapted to inject it back into the tank and thereby to generate movement of liquid in the tank.

10.      A machine tool system coolant liquid settling tank according to any one of Claims 7 to 9, including an oil skimmer which is located between the aerating means discharge outlet and said drag conveyor discharge location.

11.  A machine tool system coolant liquid settling tank according to Claim 10, wherein the oil skimmer is located above a portion of the conveying means path that extends along the bottom of the tank and which is adjacent the turn in that path.

12.  A machine tool system coolant liquid settling tank according to any one of Claims 7 to 11, wherein the aerating means discharge outlet is orientated with respect to the surface of the liquid in the tank such that it directs aerated liquid back into the tank with a vectorial component which extends along the surface of the liquid in the tank towards said discharge location.

# FIG.1A

**FIG.1B**

| | | | |
|---|---|---|---|
| **European Patent Office** | **EUROPEAN SEARCH REPORT** | Application number EP 80 30 2093.2 | |

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | DE - A1 - 2 804 091 (CERA INTERNATIONAL LTD.) <br> * claim 1; page 13, line 20 to page 15, line 9 * <br> --- | 1,7 | B 23 Q 11/10 |
| | WERKSTATT UND BETRIEB, Vol. 112, No. 6 <br> 1979 <br> München <br> G. ZWINGMANN "Kühlschmierstoffe für die spanende Metallbearbeitung" <br> pages 409 to 414 <br> * page 413, left column, lines 18 to 37 * <br> --- | 1,7 | |
| | MASCHINENMARKT-INDUSTRIEJOURNAL, Vol. 77, No. 29 <br> 1971 <br> Würzburg <br> E. GRÖSCHEL "Emulsionen kühlen Schneiden" <br> pages 599 to 603 <br> * page 603, middle column * <br> --- | 1 | **TECHNICAL FIELDS SEARCHED (Int.Cl.3)** <br><br> B 01 D 21/00 <br> B 23 Q 11/00 <br> B 24 B 55/02 <br> C 10 M 11/00 |
| A | DE - A - 2 409 819 (HENRY MANUFACTURING) <br> --- | | |
| A | DE - B - 1 552 413 (F.J. POPELAR) <br> --- | | **CATEGORY OF CITED DOCUMENTS** <br> X: particularly relevant <br> A: technological background <br> O: non-written disclosure |
| A | US - A - 3 750 847 (C.A. SLUHAN) <br> --- | | P: intermediate document <br> T: theory or principle underlying the invention <br> E: conflicting application |
| A | US - A - 2 999 597 (H.H. HARMS) <br> --- <br> ./.. | | D: document cited in the application <br> L: citation for other reasons <br><br> &: member of the same patent family, corresponding document |

| X | The present search report has been drawn up for all claims | | |
|---|---|---|---|
| Place of search **Berlin** | Date of completion of the search **12-09-1980** | Examiner **MARTIN** | |

EPO Form 1503.1 06.78

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| A | <u>US - A - 2 861 688</u> (H.H. HARMS) | | |
| | ———— | | |
| | | | **TECHNICAL FIELDS SEARCHED (Int. Cl.3)** |

EPO Form 1503.2  05.78